# EUROPÄISCHE PATENTSCHRIFT

(11) **EP 3 026 507 B1**
(45) Veröffentlichungstag und Bekanntmachung des Hinweises auf die Patenterteilung: **01.08.2018**
(21) Anmeldenummer: 15194134.1
(22) Anmeldetag: 11.11.2015
(51) Int. Cl.: G05B 13/02, G05B 11/42, G05B 15/02, G05B 19/05

(54) **VERFAHREN ZUM REGELN EINER DURCH EINE GEBÄUDETECHNISCHE INSTALLATION REGELBAREN ZUSTANDSGRÖSSE**
METHOD FOR CONTROLLING A VARIABLE WHICH CAN BE REGULATED BY A BUILDING TECHNOLOGY INSTALLATION
PROCEDE DE REGLAGE D'UNE GRANDEUR D'ETAT REGLABLE PAR UNE INSTALLATION DOMOTIQUE

(30) Priorität: 27.11.2014 DE 102014117391
(43) Veröffentlichungstag der Anmeldung: 01.06.2016
(73) Patentinhaber: Insta GmbH, 58509 Lüdenscheid (DE)
(72) Erfinder: DÄHLER, Jan, D-44809 Bochum (DE); GERLACH, Michael, D-44628 Herne (DE)

(56) Entgegenhaltungen:
- EP-A2- 0 482 900
- DE-A1-102012 019 736
- US-A- 4 669 040
- US-A- 4 754 391
- US-A- 5 568 377
- US-A1- 2005 006 487
- US-A1- 2009 228 153

## Beschreibung

Die Erfindung betrifft ein Verfahren zum Regeln einer durch eine gebäudetechnische Installation regelbaren Zustandsgröße, mit welchem Verfahren die Zustandsgröße über die Zeit zumindest über eine vorgegebene Zeitspanne erfasst und die erfasste Zustandsgröße als Ist-Zustandsgröße mit einer Soll-Zustandsgröße verglichen wird und bei Feststellen einer Regelabweichung diese daraufhin bewertet wird, ob der zum Ansteuern der gebäudetechnischen Installation vorgesehene Stellaktor zum Kompensieren der Regelabweichung beeinflusst werden soll oder nicht, wobei ein erster Regler genutzt wird, mit dem festgestellte Abweichungen der IST-Zustandsgröße von der SOLL-Zustandsgröße erfasst und kompensiert werden, und im Fall einer zu veranlassenden Kompensation der Stellaktor entsprechend beeinflusst wird und anschließend die Änderung der Zustandsgröße in Bezug auf die Beeinflussung des Stellaktors überwacht wird, ob die bewirkte Änderung der Zustandsgröße hinreichend war, um die Regelabweichung zu kompensieren.

Gebäudetechnische Installationen, wie beispielsweise eine Heizungsanlage und/oder eine Klimaanlage dienen neben anderen gebäudetechnischen Installationen dem Zweck, in dem Gebäude bzw. in einzelnen Räumen desselben bestimmte Zustände einzustellen. Bei einer Heizungsanlage und bei einer Klimaanlage betrifft dieses die Einstellung der Raumtemperatur. Die gewünschte Raumtemperatur wird zum Beispiel durch einen Nutzer manuell vorgegeben oder wird systemseitig bereitgestellt. Zum Aufrechterhalten der gewünschten Temperatur werden üblicherweise PI-Regler oder PID-Regler eingesetzt. Diese ermöglichen ein automatisches Nachregeln der Zustandsgröße, wenn Abweichungen von dem SOLL-Wert festgestellt werden. Eine Regelabweichung kann sich beispielsweise durch auf die Zustandsgröße einflussnehmende Faktoren oder durch eine manuelle Änderung der SOLL-Temperatur einstellen. Einflussnehmender Faktor auf die Raumtemperatur in der Heizperiode kann beispielsweise eine Variation in der Vorlauftemperatur oder auch das Öffnen eines Fensters sein, wodurch die Raumtemperatur beeinflusst wird.

PI-Regler sind Proportional-Integral-Regler, bei denen die Stellgröße aus einem proportionalen und integralen Anteil gebildet wird. Der P-Anteil ist der proportionale Anteil der Verstärkung. Der I-Anteil wirkt durch zeitliche Integration der Regelabweichung auf die Stellgröße mit der Gewichtung durch die Nachstellzeit. Bei einem PID-Regler kommt als D-Glied ein Differenzierer hinzu, der auf die Änderungsgeschwindigkeit der Regelabweichung reagiert. Über den D-Anteil eines PID-Reglers wird die Vorhaltzeit eingestellt.

Für die Regelung der Raumtemperatur wird die Raumtemperatur als IST-Zustandsgröße erfasst und mit der SOLL-Zustandsgröße verglichen. Überschreitet die Regelabweichung eine vorgegebene Toleranzregelabweichung, wird eine Stellgröße zum Ansteuern eines auf die gebäudetechnische Installation einwirkenden Stellaktors zum Bewirken einer Kompensation der Regelabweichung beeinflusst.

Die Beeinflussung der Stellgröße erfolgt über die Regelparameter des PI-Reglers. Diese sind entweder standardmäßig vorgegeben oder werden bei der Inbetriebnahme der Heizungsanlage eingestellt. Die Regelparameter werden im ersteren Falle aus einem theoretischen Raummodell abgeleitet. Im letzteren Falle werden diese bei einem Zustand des Raumes eingestellt, in dem sich dieser bei der Inbetriebnahme der Heizungsanlage bzw. des Reglers befindet.

Aufgrund der voreingestellten Regelparameter ist bei einem solchen Regler im Zusammenhang mit einer Kompensation einer Regelabweichung ein Überschwingen typisch, insbesondere dann, wenn externe Faktoren Ursache der Regelabweichung sind.

Aus DE 103 59 412 A1 ist ein Verfahren zum Berechnen einer Übergangskurve zum Überführen einer Regelgröße von einem Anfangswert in einen Endwert bekannt. Dieses bekannte Verfahren ist für eine Trajektorien-Planungseinrichtung vorgesehen, und zwar im Zusammenhang mit einem möglichen Fahrspurwechsel eines Kraftfahrzeuges. Berechnet wird beim Gegenstand dieses Standes der Technik eine Übergangskurve, durch die die Regelgröße zielgerichtet einem Endwert zugeführt wird. Dieses erfolgt rechnerisch. Ein Überschwingen, wie dieses bei einer Regelung von Zustandsgrößen einer gebäudetechnischen Installation, wie etwa der Heizung typisch ist, ist bei dem Verfahren gemäß diesem Stand der Technik nicht zu beobachten und wird daher in diesem auch nicht angesprochen. Dieser Stand der Technik befasst sich vielmehr mit dem Problem, wie eine erste Übergangskurve beeinflusst bzw. geändert werden muss, wenn während dem Prozess der Regelung - das heißt während des Prozesses, dass der Anfangswert in einen ersten Endwert überführt wird - sich die Rahmenbedingungen ändern und der erste berechnete Endwert nicht mehr angesteuert werden soll, sondern ein anderer, zwischenzeitlich aktualisierter.

DE 102 97 564 B4 offenbart ein Verfahren und eine Vorrichtung zum Steuern einer Photolithographie-Überlagerungsjustierung mit vorwärts gekoppelter Überlagerungsinformation. Geprüft wird der Überlagerungsfehler zweier übereinander liegender Schichten.

DE 10 2012 019 736 A1 offenbart ein Regelungssystem mit einer elektronischen Steuer- und Regelungseinrichtung zur Ansteuerung eines Stell- oder Korrekturmittels. Ziel des Gegenstandes dieses Standes der Technik ist eine Verbesserung der Regelungsgeschwindigkeit und Regelungsgenauigkeit bei möglichst geringem finanziellem Aufwand.

DE 35 11 434 A1 offenbart ein Regelsystem für eine elektrische Saunaheizung. Auch in diesem Dokument ist lediglich eine an sich bekannte Regelung offenbart.

Ein PID-Regelungsverfahren gemäß dem Oberbegriff des Anspruchs 1 ist ferner aus US 4,754,391 A bekannt. Bei dem in diesem Stand der Technik beschriebenen Regelungsverfahren werden zwei Regler eingesetzt. In Abhängigkeit von einem festgestellten Sollwertsprung wird die Regelabweichung entweder über eine konventionelle PID-Regelung oder über eine alternative Regelung kompensiert. Letzteres wird vorgenommen, wenn der Sollwertsprung eine gewisse Höhe überschritten hat. Bei der alternativen Regelung, in diesem Dokument als Tuning Mode angesprochen, wird zur Kompensation eines Sollwertsprunges eine nichtlineare Kennlinie verwendet.

EP 0 482 900 A2 offenbart ein Verfahren, bei dem in den Regelkreis eines PID-Reglers ein Kontrollglied eingeschaltet ist. Dieses dient dem Zweck, die Regelgröße auf möglicherweise darin enthaltene Fehler zu überprüfen, um auf diese Weise die Regelung zu beschleunigen.

Ein "Pattern Recognition Adaptive Controller" (PRAC) ist in US 5,568,377 beschrieben. Dieses Verfahren basiert auf Schätzungen, die die Systemantwort zugrunde legen. Dabei wird besonders hervorgehoben, wie die Schätzparameter ausgelegt werden müssen und welche weiteren Störungen wie etwa Rauschen in Betracht gezogen werden sollten. Hierdurch wird der Regelparameteranpasseinheit eine Anpassung des Parametersatzes zu jeder Zeit ermöglicht.

Mit einer Regelung, wie eingangs beschrieben, können Zustandsgrößen einer gebäudetechnischen Installation, wie beispielsweise die Raumtemperatur durch entsprechendes Ansteuern der Heizungsanlage auf dem gewünschten Arbeitspunkt (SOLL-Zustandsgröße) gehalten werden, auch wenn Regelabweichungen festgestellt werden. Jedoch wäre es wünschenswert, wenn bei der Beeinflussung der Stellgröße auch nach einer Inbetriebnahme im Raum und/oder an der Heizungs- oder Klimaanlage vorgenommene Änderungen berücksichtigt werden könnte und wenn bei einer Kompensation einer Regelabweichung ein Überschwingen reduziert werden könnte.

Gelöst wird diese Aufgabe erfindungsgemäß durch ein eingangs genanntes, gattungsgemäßes Verfahren zum Regeln einer durch eine gebäudetechnische Installation regelbaren Zustandsgröße, bei dem ferner die Änderung der Zustandsgröße in Bezug auf die Beeinflussung des Stellaktors überwacht wird, ob die bewirkte Änderung der Zustandsgröße hinreichend war, um die Regelabweichung zu kompensieren, und das Änderungsverhaltensmuster der Zustandsgröße als IST-Änderungsverhaltensmuster in hinreichender Form einem SOLL-Änderungsverhaltensmuster entspricht, wobei bei Feststellen einer Regelabweichung bezüglich des Änderungsverhaltensmusters der Zustandsgröße bei der nächsten Beeinflussung des Stellaktors diese Beeinflussung zum Annähern der Abweichung des erfassten IST-Änderungsverhaltensmusters an das SOLL-Änderungsverhaltensmuster mit zumindest einem geänderten Regelparameter erfolgt, wobei die Adaption eines IST-Änderungsverhaltensmuster der sich ändernden Zustandsgröße an ein SOLL-Änderungsverhaltensmuster mittels eines zweiten Reglers erfolgt, wobei die über die Zeit erfasste Zustandsgröße in Bezug auf folgende Kriterien nach einer erfolgten Beeinflussung der Stellgröße (6):
a) Sprungverhalten und/oder
b) bleibende Regelabweichung und/oder
c) Schwingungsverhalten
ausgewertet und diese mit entsprechenden SOLL-Änderungsverhaltensmustern verglichen wird.

Dieses Verfahren zeichnet sich durch eine besondere adaptive Regelung aus. Um dies zu erreichen wird die zu überwachende Zustandsgröße, also beispielsweise die durch eine Heizungs- und/oder Klimaanlage regelbare Raumtemperatur über eine vorgegebene Zeitspanne erfasst und über die Zeit aufgezeichnet. Auf diese Weise können Änderungen der Zustandsgröße über die Zeit ausgewertet werden. Mithin ist es bei diesem Verfahren möglich, das Änderungsverhalten der überwachten Zustandsgröße nach Beeinflussung des Stellaktors, mit dem die gebäudetechnische Installation, also beispielsweise die Heizung in einem Raum angesteuert wird, zum Herbeiführen einer Kompensation einer Regelabweichung auszuwerten. Somit ist dieses Verfahren nicht allein darauf beschränkt, eine Regelabweichung der Zustandsgröße zu erfassen und bei Überschreiten einer tolerablen Regelabweichung den Stellaktor zum Kompensieren der Regelabweichung zu beeinflussen. Vielmehr wird auch die Auswirkung dieser Beeinflussung auf die Änderung der Zustandsgröße ausgewertet. Somit wird bei diesem Verfahren nicht lediglich überprüft, ob bei einer zu veranlassenden Kompensation die IST-Zustandsgröße an die SOLL-Zustandsgröße herangeführt worden ist, sondern ob auch das Änderungsverhalten, mit dem die Zustandsgröße von der IST-Zustandsgröße auf die SOLL-Zustandsgröße geführt ist einem SOLL-Änderungsverhalten entspricht. Letztendlich kommen daher zwei Regler bei diesem Verfahren zum Einsatz, und zwar ein erster Regler, mit dem festgestellte Abweichungen der IST-Zustandsgröße von der SOLL-Zustandsgröße erfasst und kompensiert werden. Mittels eines zweiten Reglers erfolgt die Adaption eines IST-Änderungsverhaltes der sich ändernden Zustandsgröße an ein SOLL-Änderungsverhalten. Durch diese Maßnahme ist eine Regelung, bei .der das Ausgleichsverhalten der Zustandsgröße dem aperiodischen Grenzfall nahe kommt, möglich.

Die Beobachtung des Änderungsverhaltens der Zustandsgröße nach einer Beeinflussung des Stellaktors macht es möglich, dass ein das Verfahren ausführender Regler bei einer Inbetriebnahme der gebäudetechnischen Installation nicht eingelernt werden muss. Vielmehr passt sich dieser Regler den jeweiligen tatsächlichen Gegebenheiten, die auf die überwachte Zustandsgröße Einfluss nehmen selbsttätig an. Im Falle einer Heizungsanlage als gebäudetechnische Installation und einer Überwachung der Raumtemperatur fließen automatisch die Raumgröße und andere auf die Raumtemperatur einflussnehmende Faktoren in die Regelstrecke ein. Dieses gilt nicht nur für eine Inbetriebnahme der Regelung, sondern setzt sich über die gesamte Lebensdauer des Reglers fort. Änderungen in den auf die überwachte Zustandsgröße einflussnehmenden Faktoren, beispielsweise eine Änderung der Raumausstattung und/oder der Heizungs- oder Klimaanlage bei Überwachen der Raumtemperatur, werden durch eine Änderung der die Stellgröße bestimmenden Regelparameter und somit in einer geänderten Ansteuerung des Stellaktors berücksichtigt. Daher ist dieses Verfahren adaptiv. Es versteht sich, dass durch dieses Verfahren auch schleichende Änderungen im Ansprechverhalten der Zustandsgröße berücksichtigt werden, die beispielsweise systembedingt sein können, etwa durch eine Alterung und/oder Abnutzung gebäudetechnischer Installationen, mit denen die Zustandsgröße, also beispielsweise die Raumtemperatur beeinflusst wird. Durch die beschriebene Adaptivität, die dieses Verfahren bietet, kann der Stellaktor in einem ersten Beeinflussungsschritt nur so weit beeinflusst werden, dass ein Überschwingen der Zustandsgröße sicher vermieden ist. Die Beobachtung der Änderung der Zustandsgröße nach einer solchen Beeinflussung derselben erlaubt sodann ein Nachregeln, etwa dann, wenn durch die vorgenommene Beeinflussung und das erfasste Änderungsverhalten der Zustandsgröße nicht dem gewünschten SOLL-Änderungsverhalten entspricht, also beispielsweise eine Änderung der Zustandsgröße zu langsam erfolgt. Insofern ist es mit diesem Verfahren möglich, sich über ein oder mehrere Adaptionsschritte mit denen die Stellgröße zum Ansteuern des Stellaktors beeinflusst wird (etwa die Vorhaltzeit, die Nachstellzeit und der P-Anteil), exakt den gewünschten Arbeitspunkt der Zustandsgröße zu erreichen. Es versteht sich, dass ein solches Nachregeln nach einer ersten Beeinflussung des Stellaktors durch festgestellte Abweichungen des IST-Änderungsverhaltens gegenüber dem SOLL-Änderungsverhalten in ein oder mehreren Schritten vorgenommen werden kann.

Bei diesem adaptiven Verfahren kommen letztendlich zwei Regler zum Einsatz. In einem ersten Regelkreis wirkt die überwachte Zustandsgröße, beispielsweise die Raumtemperatur, auf einen ersten Regler. Festgestellte Abweichungen der IST-Zustandsgröße von der SOLL-Zustandsgröße werden im Rahmen dieser Ausführungen als Regelabweichung angesprochen. Mittels eines zweiten Regelkreises erfolgt die Adaption der die Stellgröße bildenden Regelparameter zum Ansteuern des die Installation ansteuernden Stellaktors. Dieses erfolgt anhand eines Mustervergleiches durch Vergleichen eines IST-Änderungsverhaltensmusters gegenüber einem SOLL-Änderungsverhaltensmuster. Abweichungen im IST-Änderungsverhaltensmuster von dem SOLL-Änderungsverhaltensmuster sind im Rahmen dieser Ausführungen als Musterregelabweichung angesprochen.

Aus diesem Grunde ist es bei einer Inbetriebnahme dieses Regelungsverfahrens allein erforderlich, die gebäudetechnische Installation in Betrieb zu nehmen und den Regler einzuschalten.

Die Überwachung des Änderungsverhaltens der Zustandsgröße nach einer Beeinflussung des Stellaktors, kann, wie dieses bei einem Ausführungsbeispiel vorgesehen ist, auch zur Erkennung der Art der gebäudetechnischen Installation, durch die die Zustandsgröße letztendlich beeinflusst wird, verwendet werden. Dann braucht der Regler selbst keine Vorabinformation darüber zu haben, mit welcher Art gebäudetechnischer Installation eine Zustandsgröße beeinflusst wird. Im Falle einer Heizungsanlage als gebäudetechnische Installation kann es sich um eine Fußbodenheizung, eine Heizung mit Radiatoren oder eine Warmluftheizung handeln. Die vorstehende Aufzählung muss nicht als abschließend angesehen werden. Ausgenutzt wird bei der vorbeschriebenen automatischen Erkennung das Ansprechverhalten des jeweiligen Systems, was wiederum aus dem Änderungsverhalten der Raumtemperatur als überwachte Zustandsgröße ablesbar ist. Die Systemreaktionszeit ist bei einer Fußbodenheizung deutlich langsamer als bei einer mit Radiatoren betriebenen Heizung, welche wiederum langsamer ist als eine Warmluftheizung. Auf diese Weise kann die Art der gebäudetechnischen Installation ermittelt werden, um in Abhängigkeit von der Art der gebäudetechnischen Installation die Regelparameter zum Bereitstellen einer Stellgröße zum Beeinflussen des Stellaktors an die jeweils ermittelte gebäudetechnische Installation anzupassen.

Vorteilhaft wird die Stellgröße zum Ansteuern des Stellaktors bei diesem Verfahren bezüglich ihres P- und I-Anteils zur Kompensation einer Regelabweichung dergestalt beeinflusst, dass der I-Anteil erst inkrementiert bzw. dekrementiert wird, wenn der P-Anteil auf unter 100 % bzw. -100 % abgesenkt bzw. angehoben worden ist. Erreicht wird hiermit, dass im Unterschied zum Stand der Technik der I-Anteil erst inkrementiert bzw. dekrementiert wird, wenn ein vordefiniertes, den Arbeitspunkt umgebendes Proportionalband erreicht worden ist. Im Falle einer Heizungsanlage und der überwachten Raumtemperatur würde bei dieser Betriebsweise bei einem bestimmten Sollwertsprung über einige Grad Celsius die Stellgröße zunächst mit einem P-Anteil von 100 % gebildet werden. Erst wenn die Raumtemperatur in das Proportionalband, welches beispielsweise 1 K von dem gewünschten Arbeitspunkt abweicht, einläuft, wird der P-Anteil reduziert und der I-Anteil inkrementiert (bei positivem Sollwertsprung) oder dekrementiert (bei negativem Sollwertsprung). Der Vorteil dieser Ausgestaltung ist, dass unabhängig von der Höhe eines Sollwertsprungs der I-Anteil sich gleich groß aufgebaut hat. Hierdurch ist einem Überschwingen wirksam entgegengewirkt, mit der Folge, dass die Arbeitspunktfindung zielgerichteter und rascher erfolgt. Von besonderem Vorteil bei diesem Verfahren ist, dass das den Arbeitspunkt umgebende Proportionalband sehr klein gehalten werden kann, sogar in einer engen Bandbreite von 0,5 bis 2 K.

Ausgewertet wird das Änderungsverhalten der Zustandsgröße nach einer vorangegangenen Stellaktorbeeinflussung auf die Kriterien: Sprungverhalten und/oder bleibende Regelabweichung und/oder Schwingungsverhalten. Die Auswertung erfolgt durch einen Vergleich des Änderungsmusters eines solchen Kriteriums mit einem SOLL-Änderungsmuster. Durch diese Maßnahme können die Regelparameter zum Bereitstellen der Stellgröße zur Beeinflussung des Stellaktors an das Optimum angepasst bzw. diesem sehr nah angenähert werden. Aufgrund der Rückmeldung des Verhaltens der überwachten Zustandsgröße erfolgt dieses unter dem Einfluss der auf die Zustandsgröße Einfluss nehmenden Faktoren die durchaus Änderungen unterworfen sein können, wie etwa bei einer Heizungsanlage jahreszeitlichen Änderungen. Wird eine Musterregelabweichung in dem bezüglich eines oder mehrerer dieser Kriterien überwachten Änderungsverhalten festgestellt, wird in Abhängigkeit von der Art der Musterregelabweichung die nächste Beeinflussung des Stellaktors unter Berücksichtigung dieser Abweichung vorgenommen, und zwar dergestalt, dass das bei der letzten Stellaktorbeeinflussung festgestellte IST-Änderungsverhalten mehr dem SOLL-Änderungsverhalten entspricht. Vorzugsweise wird eine solche Anpassung erst dann vorgenommen, wenn die Musterregelabweichung in einem oder mehreren der vorgenannten Kriterien von einem SOLL-Muster eine vorgegebene Toleranzabweichung überschreitet.

Zweckmäßig ist eine Weiterbildung dieser Aufzeichnung des Änderungsverhaltensmusters, in der das oder die Kriterien einzeln und/oder auch in Kombination miteinander bewertet werden. Dieses erfolgt in Abhängigkeit von der erfassten Musterregelabweichung. Bei einer solchen Ausgestaltung braucht nur der Bewertungswert und nicht die gesamte Änderungskurve gespeichert zu werden. Eine Bewertung erfolgt in Abhängigkeit von dem Maß der Musterregelabweichung des jeweiligen Kriteriums von einem SOLL-Wert. Eine solche Bewertung kann, muss jedoch nicht linear vorgenommen werden.

Eine geänderte Beeinflussung des Stellaktors erfolgt bei einer solchen Ausgestaltung des Verfahrens somit erst dann, wenn ein Kriterium aus der Anzahl der überwachten Kriterien einen Schwellwert überschritten hat oder wenn, wie dieses in einem bevorzugten Ausführungsbeispiel der Fall ist, die Bewertung der miteinander verknüpften Kriterien, beispielsweise der Mittelwert der Einzelbewertungen einen gewissen Wert überschreitet.

Zum Aufzeichnen der überwachten Zustandsgröße über die Zeit wird zweckmäßigerweise ein Ringspeicher eingesetzt. Dieser ist ausgelegt, damit innerhalb einer geeigneten Überwachungsperiode entsprechend der gewünschten Abtastrate die jeweilige Zustandsgröße gespeichert werden kann. Bei einer Raumtemperaturüberwachung wird es als ausreichend angesehen, wenn der Ringspeicher ausgelegt ist, beispielsweise über einen Zeitraum von sechs Stunden mit einer Abtastung der Zustandsgröße (Raumtemperatur) beispielsweise alle 30 Sekunden Daten aufzunehmen. Den Speicherzeitraum und die Abtastrate wird man bezüglich der zu überwachenden Zustandsgröße dergestalt auswählen, dass aus den gewonnenen Daten ein Änderungsverhaltensmuster hinreichend gut, d.h.: mit hinreichender Auflösung, erkennbar ist. Aufgrund der Betrachtung des aktuellen Änderungsverhaltens mit der Änderungsverhaltensmusterbewertung brauchen Daten der Zustandsgröße über die Zeit nur über eine relativ kurze Zeitspanne, jedenfalls nicht über Tage oder Wochen aufbewahrt zu werden. Folglich kann der für die Durchführung des Verfahrens eingesetzte Speicher entsprechend klein gehalten werden.

Vorteilhafterweise wird auf den Stellaktor bei Feststellen einer Regelabweichung zur Kompensation derselben nur dann Einfluss genommen, wenn eine solche Einflussnahme möglich und auch sinnvoll ist. Insofern wird bei dieser Verfahrensausgestaltung überprüft, ob ein kausaler Zusammenhang zwischen der aus den Regelparametern gebildeten Stellgröße zum Ansteuern des Stellaktors und der IST-Zustandsgröße feststellbar ist. Durch diese Maßnahme soll verhindert werden, dass der Stellaktor beeinflusst wird, wenn beispielsweise ein Systemfehler vorliegt oder eine Störung vorhanden ist und somit eine Kompensation der festgestellten Regelabweichung wenig Sinn machen würde. Bei der Überwachung der Raumtemperatur als Zustandsgröße im Zusammenhang mit einer Heizungsanlage wird beispielsweise auf einen Systemfehler geschlossen, wenn die Vorlauftemperatur nicht vorhanden ist oder diese von der SOLL-Vorlauftemperatur erheblich abweicht. Gleichermaßen wird auf einen Systemfehler geschlossen, wenn etwa kein Stellventil vorhanden ist. Andere Systemfehler sind ebenfalls möglich. Eine Störung kann beispielsweise vorliegen, wenn ein Fenster in dem Raum geöffnet worden ist, dessen Raumtemperatur überwacht wird. In der Heizperiode führt dies zu einem Temperaturabfall und somit zu einer Regelabweichung, die grundsätzlich zur Kompensation derselben eine Beeinflussung des Stellaktors zur Folge hat. Eine unerwartete Heizquelle kann in den Raum beispielsweise durch Inbetriebnahme eines Kamins hinzugefügt werden. Diese Systemfehler und/oder Stördaten, was gleichermaßen für andere Daten möglich ist, werden in den Regelalgorithmus eingebracht. Eine Beeinflussung des Stellaktors findet bei Feststellen einer Störung und/oder eines Systemfehlers sinnvollerweise nicht statt. Vielmehr wird zum Einstellen der gewünschten Raumtemperatur als Zustandsgröße der Stellaktor erst beeinflusst werden, wenn die Störung nicht mehr vorliegt.

Nachfolgend ist die Erfindung anhand eines Ausführungsbeispiels unter Bezugnahme auf die beigefügten Figuren beschrieben. Es zeigen:
- **Fig. 1:**: ein Blockschaltbild mit Komponenten zum adaptiven Regeln der Temperatur in einem Raum eines Gebäudes,
- **Fig. 2:**: ein Diagramm darstellend ein SOLL-Änderungsverhalten einer überwachten Zustandsgröße nach Beeinflussung der Stellgröße,
- **Fig. 3a-3d:**: beispielhaft erfasste IST-Änderungsverhaltensmuster der überwachten Zustandsgröße nach einer Beeinflussung der Stellgröße,
- **Fig. 4a-4c:**: drei Bewertungstabellen, mit denen Kriterien von erfassten IST-Änderungsverhaltensmustern bewertet werden, und
- **Fig. 5:**: eine aus den Kriterien der Figuren 4a - 4c gebildete Aktionstabelle zum Darstellen der bewirkten Beeinflussung der Stellgröße.

In einem schematisiert angedeuteten Raum 1 wird als Zustandsgröße die Raumtemperatur mittels eines Temperatursensors 2 überwacht. Zum Beeinflussen der Raumtemperatur dient eine Heizung 3, die bei dem dargestellten Ausführungsbeispiel durch eine Fußbodenheizung bereitgestellt ist. Ausgelesen werden die Daten des Temperatursensors 2 von einer Auswerte- und Steuereinheit 4, die die in einer bestimmten Abtastrate erfassten Temperaturdaten in einem Ringspeicher 5 ablegt. Der Ringspeicher 5 des dargestellten Ausführungsbeispiels ist ausgelegt, um bei einer Abtastrate von einer Temperaturmessung je 30 Sekunden diese Daten über einen Zeitraum von sechs Stunden zu speichern. Die Zeitspanne und die Abtastrate sind hinreichend, um ein Änderungsverhaltensmuster mit gutem Auflösungsvermögen zu erfassen. Die Auswerte- und Steuereinheit 4 dient zudem zum Bereitstellen von Regelparametern, die die Stellgröße für den Stellaktor 6 zum Ansteuern der Heizung 3 beeinflussen. Die Regelparameter sind in einem Regelparameterspeicher 4.1 als Teil der Auswerte- und Steuereinheit 4 abgelegt. Die Auswerte- und Steuereinheit 4 ist bei dem dargestellten Ausführungsbeispiel zusätzlich durch zwei Datenlieferanten 7, 8 beaufschlagt. Durch den Datenlieferant 7 werden Systemdaten der Heizungsanlage 3 der Auswerte- und Steuereinheit 4 zugeführt, wie beispielsweise die Vorlauftemperatur, das Vorhandensein oder Nichtvorhandensein eines Stellventils oder dergleichen. Über den Datenlieferant 8 erhält die Auswerte- und Steuereinheit 4 zudem Daten in Bezug auf die Raumtemperatur einflussnehmenden Faktoren. Hierbei kann es sich um Daten handeln, die die Tür- und/oder Fensterstellung betreffen. Somit ist die Auswerte- und Steuereinheit 4 auch darüber informiert, wann in dem Raum 1 beispielsweise ein Fenster geöffnet ist.

Die Auswerte- und Steuereinheit 4 wertet die erfassten Raumtemperaturdaten über die Zeit aus und vergleicht diese mit der SOLL-Raumtemperatur, um zu überprüfen, ob eine Regelabweichung vorliegt. Eine Änderung in der Raumtemperatur zwischen einem Tagbetrieb und einem Nachtbetrieb kann systemseitig vorprogrammiert sein. Bei der Umstellung von dem Nachtbetrieb mit einer niedrigeren Raumtemperatur zum Tagbetrieb mit einer höheren Raumtemperatur wird sodann ein Sollwertsprung, mithin eine Regelabweichung detektiert. Wenn keine Negativdaten aus einem der beiden Datenlieferanten 7, 8 vorliegen, wird in einem solchen Fall die Auswerte- und Steuereinheit 4 die Stellgröße mit Regelparametern zum Ansteuern des Stellaktors 6 zum Hochfahren der Heizung 3 und damit zum Kompensieren der Regelabweichung durch Erhöhen der Raumtemperatur beaufschlagen. Dasselbe wird ausgeführt, wenn benutzerseitig die SOLL-Raumtemperatur angehoben wird.

Bei dem bei diesem Ausführungsbeispiel durchgeführten Regelverfahren wird anschließend in einem zweiten Regelkreis die Reaktion der Raumtemperatur als überwachte Zustandsgröße in Bezug auf mehrere Kriterien überwacht, und zwar anhand des sich durch die Beeinflussung einstellenden Änderungsverhaltensmusters, mithin über den über die Zeit aufgetragenen Temperaturverlauf. Überwacht werden bei diesem Ausführungsbeispiel das Sprungverhalten, die bleibende Regelabweichung und das Schwingungsverhalten. Jedes dieser Kriterien wird durch die Auswerte- und Steuereinheit 4 hinsichtlich eines SOLL-Änderungsverhaltensmuster bewertet. Die Bewertung zu jedem dieser Kriterien wird in einem Musterbewertungsspeicher abgelegt, der Teil eines Adaptionsgliedes 4.2 der Auswerte- und Steuereinheit 4 ist. Über das Adaptionsglied 4.2 können die in dem Regelparameterspeicher 4.1 abgelegten Regelparameter beeinflusst werden. Aus den jeweils aktuell gespeicherten Regelparametern wird die Stellgröße zum Ansteuern des Stellaktors 6 gebildet, wenn der Stellaktor 6 beeinflusst werden soll.

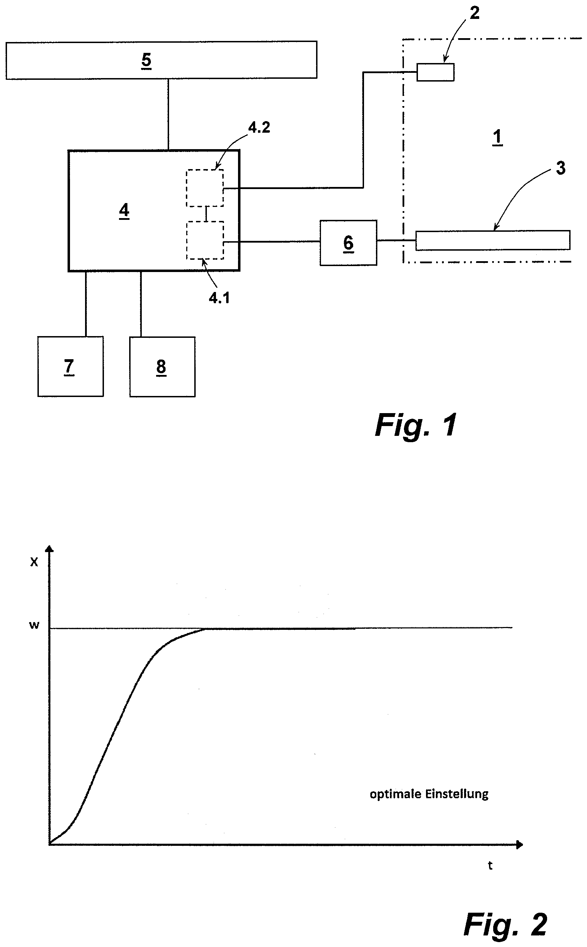

Figur 2 zeigt bei dem dargestellten Ausführungsbeispiel das SOLL-Änderungsverhaltensmuster. Erkennbar ist, dass bei diesem Ausführungsbeispiel der SOLL-Arbeitspunkt w aperiodisch erreicht wird.

Werden bei der IST-Änderungsverhaltensmusterbewertung Musterregelabweichungen zu dem SOLL-Änderungsverhaltensmuster festgestellt, die eine erneute Beeinflussung des Stellaktors 6 erforderlich machen, wird dieser erneut mit einer aus den Regelparametern abgeleiteten Steuergröße beeinflusst. Diese Überwachungsschritte werden solange wiederholt, bis sich der Arbeitspunkt w eingeregelt hat. In Abhängigkeit von der Art der Musterregelabweichung in einem IST-Änderungsverhaltensmuster wird durch entsprechend geänderte Regelparameter die Stellgröße gebildet und damit der Stellaktor 6 beeinflusst, um die festgestellte Musterregelabweichung zu kompensieren. Auf diese Weise wird eine für den Raum 1 optimale Stellaktorbeeinflussung erarbeitet, die sodann als neues IST-Änderungsverhaltensmuster in dem Adaptierungsglied 4.2 abgelegt wird und fortan als Vergleichsmuster dient.

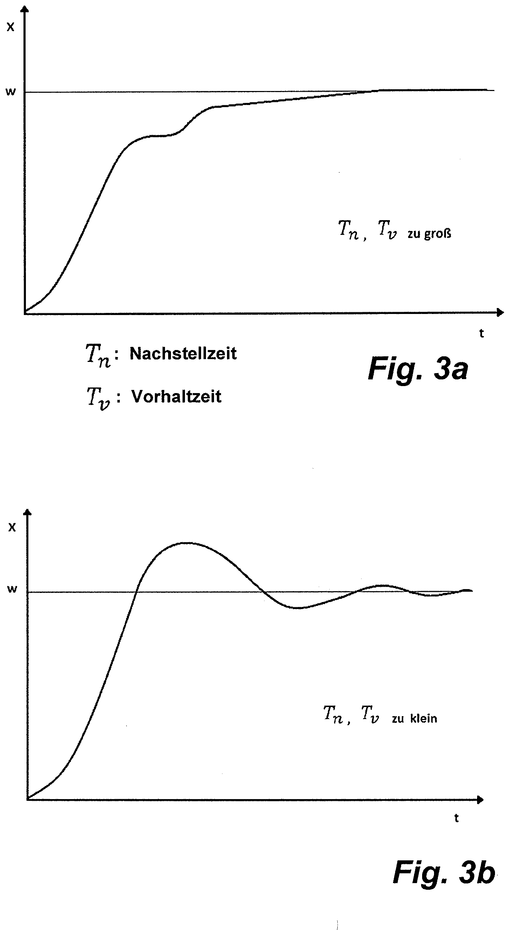

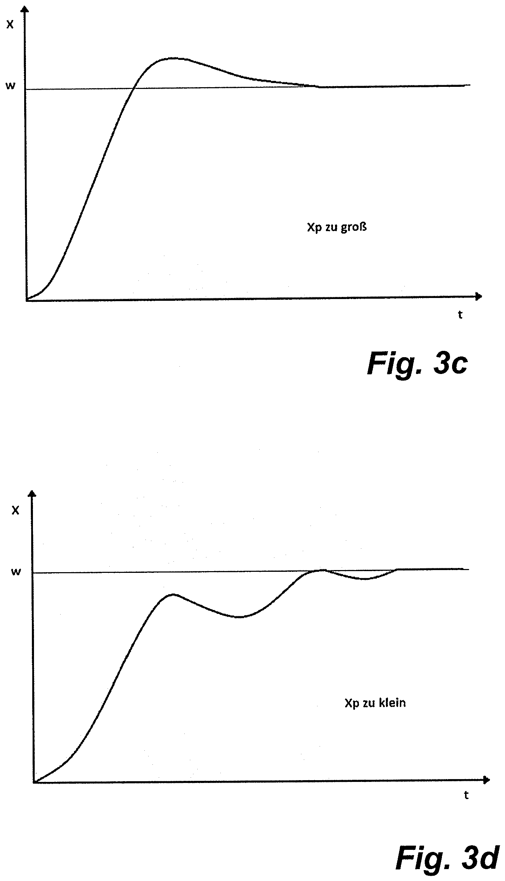

Figuren 3a-3d zeigen schematisiert unterschiedliche Änderungsverhaltensmuster, die von dem SOLL-Änderungsverhaltensmuster gemäß Figur 2 abweichen. Der jeweilige Defizit, der Ursache der jeweils dokumentierten Musterregelabweichung in dem Änderungsverhaltensmuster ist, ist in den Diagrammen angegeben. Es versteht sich, dass eine Kombination der in den Diagrammen der Figuren 3a-3d gezeigten Defizite möglich ist.

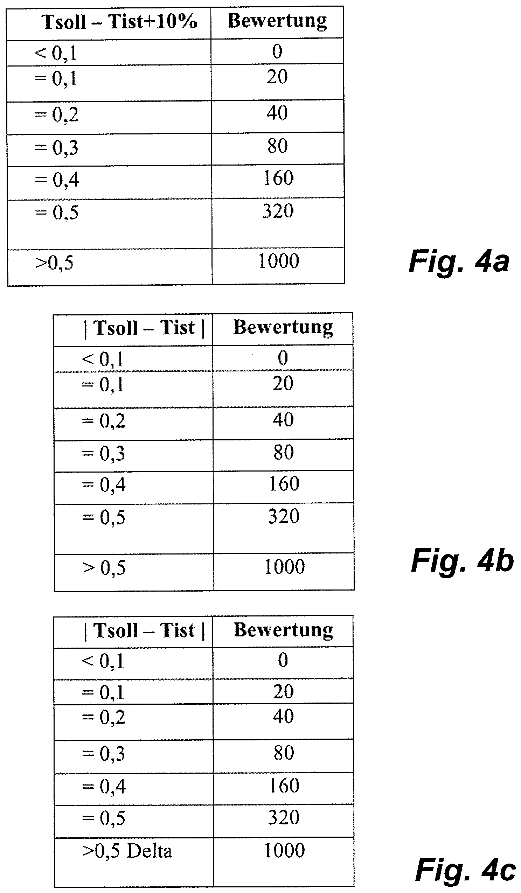

Bewertet wird eine Musterregelabweichung bei dem dargestellten Ausführungsbeispiel anhand von Bewertungstabellen, die beispielhaft in den Figuren 4a-4c zu den Kriterien "Sprungverhalten", "bleibende Regelabweichung" und "Schwingungsverhalten" gezeigt sind. Die Bewertung erfolgt in dem Ausführungsbeispiel nicht linear sondern nach einem vorgegebenen Muster. Dabei ist die Tabelle gemäß Figur 4a eine Bewertung des Sprungsverhaltens, diejenige der Figur 4b der Musterregelabweichung und diejenige der Figur 4c des Schwingungsverhaltens.

Bei der Auswertung des Kriteriums "Sprungverhalten" wird der Temperaturverlauf während eines Sollwertsprunges analysiert. Voraussetzung für eine sich hieraus ergebende Beeinflussung der aktuellen Regelparameter ist, dass ein Überschwingen weniger als 10 % vom Sollwertsprung beträgt, dass ein Sollwertsprung von zumindest 2 K vorliegt und so lange anliegt, dass das Änderungsverhalten sinnvoll analysiert werden kann.

Bei der Beobachtung der "bleibenden Regelabweichung" wird der Temperaturverlauf bzw. eine festgestellte Musterregelabweichung über einen längeren Zeitraum beobachtet. Voraussetzung für die Feststellung einer Musterregelabweichung ist, dass die IST-Raumtemperatur kleiner als die SOLL-Raumtemperatur ist und die Stellgröße weniger als 100 % beträgt. Eine Toleranz von 0,1 K ist bei diesem Ausführungsbeispiel erlaubt. Figur 4b zeigt die Bewertung der Musterregelabweichung.

Bei der Bewertung des Kriteriums "Schwingungsverhalten" wird die Stabilität des Schwingungsverhaltens nach erfolgter Beeinflussung des Stellaktors 6 analysiert. Auch hier ist bei dem dargestellten Ausführungsbeispiel eine Toleranz von 0,1 K erlaubt. Figur. 4c zeigt die diesbezügliche Bewertungstabelle.

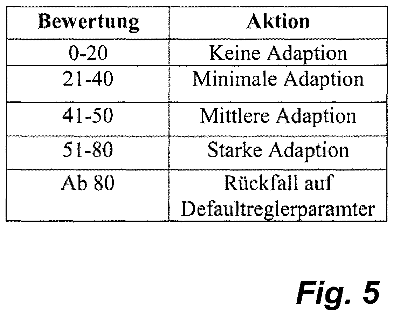

Die Bewertung der einzelnen Kriterien anhand der Bewertungstabellen zu einem IST-Änderungsverhaltensmuster werden zum Aufbau einer Aktionstabelle bei dem dargestellten Ausführungsbeispiel gemittelt. Die in Figur 5 gezeigte Aktionstabelle zeigt, in welchem Maße bei einer bestimmten Bewertung eine Adaption und somit eine Beeinflussung der Regelparameter zum Bilden einer Stellgröße für die Ansteuerung des Stellaktors 6 durchgeführt wird. Wie aus der Tabelle der Figur 5 zu entnehmen, wird bei einer Bewertung von bis zu 20 Punkten keine Beeinflussung der aktuellen Regelparameter vorgenommen. Erst ab einer Bewertung der gemittelten Bewertungen der Einzelkriterien von 21 Punkten wird auf die Regelparameter Einfluss genommen. In Abhängigkeit von der Gesamtbewertung ist die Adaption unterschiedlich stark. Ab einer gewissen Bewertung, die bei dem dargestellten Ausführungsbeispiel größer als 80 Punkte ist, ist die festgestellte Musterregelabweichung in dem Änderungsverhaltensmuster zu groß, als das in sinnvoller Weise Einfluss eine Kompensation der Musterregelabweichung vorgenommen werden könnte. In einem solchen Fall werden die Regelparameter auf ihren Default-Wert gesetzt, sodass der Regler ausgehend von diesen Werten sich erneut an die in dem Raum 1 herrschenden Bedingungen optimal anpassen kann. Default-Regelparameter sind typischerweise werksseitig vorgegeben. Oder: Es werden als Default-Regelparameter diejenigen genommen, die sich nach einer erstmaligen Inbetriebnahme des Regelsystems eingestellt haben. In einem solchen Fall werden diese in einem gesonderten Speicher abgelegt, um bei Bedarf abgerufen werden zu können.

Eine Adaption, wie in der Aktionstabelle der Figur 5 angesprochen, erfolgt selbstverständlich nur dann, wenn keine Systemstörung oder eine andere Störquelle durch einen der Datenlieferanten 7 oder 8 der Auswerte- und Steuereinheit 4 gemeldet worden ist.

Die Beschreibung der Erfindung macht deutlich, dass durch die besondere Adaptivität des Regelverfahrens systemische und andere Änderungen, die zu einem von dem ausgegangenen Standard abweichenden Verhalten der überwachten Zustandsgröße führen, kompensiert werden können. Zudem erlaubt dieses Verfahren, dass die Regelung in besonderer Weise an den aperiodischen Grenzfall angenähert durchgeführt werden kann. Die Regelung der überwachten Zustandsgröße, also beispielsweise der Raumtemperatur erfolgt somit für den jeweiligen Nutzen gegenüber vorbekannten Verfahren spürbar verbessert.

Die Beschreibung der Erfindung lässt deutlich werden, dass mit dem beschriebenen Regelverfahren eine selbsttätige Langzeitanpassung des Reglers an sich einstellende Änderungen im Ansprechverhalten der gebäudetechnischen Installation, beispielsweise der Heizanlage erfolgt. Die auf besondere Weise bewirkte Adaptivität macht es zudem möglich, dass keine Inbetriebnahmeabfolge erforderlich ist, sondern der Regler schlichtweg in Betrieb genommen zu werden braucht, da dieser seine Regelparameter den Vorgaben entsprechend optimal selbst einstellt. In diesem Zusammenhang ist erwähnenswert, dass die lebenslange Beibehaltung eines an ein Optimum angenäherten Regelverhaltens letztendlich nur einen sehr geringen Speicherbedarf benötigt. Schließlich braucht nur ein Änderungsverhaltensmuster gespeichert zu werden. Von wirtschaftlichem Vorteil ist zudem, dass sich dieses Verfahren ohne zusätzliche aufwendige Hardwarekomponenten durchführen lässt.

Die Erfindung ist anhand eines Ausführungsbeispiels beschrieben worden. Ohne den Umfang der geltenden Ansprüche zu verlassen, ergeben sich für einen Fachmann weitere Ausgestaltungen, die Erfindung verwirklichen zu können.

## Patentansprüche

1. Verfahren zum Regeln einer durch eine gebäudetechnische Installation regelbaren Zustandsgröße, mit welchem Verfahren die Zustandsgröße über die Zeit zumindest über eine vorgegebene Zeitspanne erfasst und die erfasste Zustandsgröße als IST-Zustandsgröße mit einer SOLL-Zustandsgröße verglichen wird und bei Feststellen einer Regelabweichung diese daraufhin bewertet wird, ob der zum Ansteuern der gebäudetechnischen Installation vorgesehene Stellaktor (6) zum Kompensieren der Regelabweichung beeinflusst werden soll oder nicht, wobei ein erster Regler genutzt wird, mit dem festgestellte Abweichungen der IST-Zustandsgröße von der SOLL-Zustandsgröße erfasst und kompensiert werden, und im Fall einer zu veranlassenden Kompensation der Stellaktor (6) entsprechend beeinflusst wird und anschließend die Änderung der Zustandsgröße in Bezug auf die Beeinflussung des Stellaktors (6) überwacht wird, ob die bewirkte Änderung der Zustandsgröße hinreichend war, um die Regelabweichung zu kompensieren, **dadurch gekennzeichnet, dass** die Änderung der Zustandsgröße in Bezug auf die Beeinflussung des Stellaktors (6) zudem daraufhin überwacht wird, ob das Änderungsverhaltensmuster der Zustandsgröße als IST- Änderungsverhaltensmuster in hinreichender Form einem SOLL- Änderungsverhaltensmuster entspricht, wobei bei Feststellen einer Regelabweichung bezüglich des Änderungsverhaltensmusters der Zustandsgröße bei der hächsten Beeinflussung des Stellaktors (6) diese Beeinflussung zum Annähern der Abweichung des erfassten IST- Änderungsverhaltensmusters an das SOLL-Änderungsverhaltensmuster mit zumindest einem geänderten Regelparameter erfolgt, wobei die Adaption eines IST-Änderungsverhaltensmuster der sich ändernden Zustandsgröße an ein SOLL-Änderungsverhaltensmuster mittels eines zweiten Reglers erfolgt, wobei die über die Zeit erfasste Zustandsgröße in Bezug auf folgende Kriterien nach einer erfolgten Beeinflussung der Stellgröße (6):
a) Sprungverhalten und/oder
b) bleibende Regelabweichung und/oder
c) Schwingungsverhalten
ausgewertet und diese mit entsprechenden SOLL-Änderungsverhaltensmustern verglichen wird.

2. Verfahren nach Anspruch 1, **dadurch gekennzeichnet, dass** eine Regelabweichung der Zustandsgröße festgestellt wird, wenn diese außerhalb einer erlaubten Toleranz liegt und über einen gewissen Zeitraum angedauert hat.

3. Verfahren nach Anspruch 2, **dadurch gekennzeichnet, dass** eine erfasste Abweichung des Änderungsverhaltensmusters der Zustandsgröße eines der genannten Kriterien von dem jeweiligen SOLL-Muster als änderungsbedürftige Musterregelabweichung gilt, wenn die Abweichung des erfassten IST-Änderungsverhaltensmusters von dem SOLL-Änderungsverhaltensmuster eine erlaubte Toleranz überschreitet.

4. Verfahren nach einem der Ansprüche 1 bis 3, **dadurch gekennzeichnet, dass** jedes Kriterium zu dem eine Änderung in der Beeinflussung des Stellaktors (6) erforderlich machende Musterregelabweichung festgestellt wird, in Bezug auf die Größe der Abweichung bewertet und eine Beeinflussung des Stellaktors (6) vorgenommen wird, wenn
- die Bewertungsgröße größer als ein vorgegebener Schwellwert ist oder
- die Bewertungsgrößen der überwachten Kriterien in einer vorgegebenen Verknüpfung miteinander größer als ein vorgegebener Schwellwert ist.

5. Verfahren nach einem der Ansprüche 1 bis 4, **dadurch gekennzeichnet, dass** eine Beeinflussung des Stellaktors (6) als Folge einer festgestellten Regelabweichung nur erfolgt, wenn ein kausaler Zusammenhang zwischen der sich aus den Regelparametern ergebenden Stellgröße und der IST-Zustandsgröße feststellbar ist.

6. Verfahren nach Anspruch 5, **dadurch gekennzeichnet, dass** in die Auswertung neben der überwachten Zustandsgröße weitere Daten der gebäudetechnischen Installation, anderer gebäudetechnischer Installationen oder zusätzlicher Daten einfließen, um den kausalen Zusammenhang zwischen der sich aus den Regelparametern ergebenden Stellgröße und der IST-Zustandsgröße zu überprüfen.

7. Verfahren nach einem der Ansprüche 1 bis 6, **dadurch gekennzeichnet, dass** die über die Zeit erfasste Zustandsgröße in einem Ringspeicher (5) abgelegt wird.

8. Verfahren nach einem der Ansprüche 1 bis 7, **dadurch gekennzeichnet, dass** die Bewertung der bleibenden Regelabweichung, des Sprungverhaltens und/oder des Schwingungsverhaltens in einem Speicher abgelegt werden und solange gespeichert bleiben bis eine nachfolgende Auswertung des Änderungsverhaltens nach einer Beeinflussung des Stellaktors (6) eine andere Bewertung eines einzelnen Kriteriums und/oder der verknüpften Kriterien geliefert hat.

9. Verfahren nach einem der Ansprüche 1 bis 8, **dadurch gekennzeichnet, dass** bei der Regelung der Stellgröße zum Ansteuern des Stellaktors (6) der I-Anteil erst inkrementiert bzw. dekrementiert wird, wenn der P-Anteil auf unter 100 % bzw. -100 % abgesenkt bzw. angehoben worden ist.

10. Verfahren nach Anspruch 9, **dadurch gekennzeichnet, dass** zum Ansteuern des Stellaktors (6) der I-Anteil inkrementiert bzw. dekrementiert wird, wenn der P-Anteil in ein den Arbeitspunkt (w) einfassendes Proportionalband einläuft.

11. Verfahren nach Anspruch 10, **dadurch gekennzeichnet, dass** das Proportionalband eine Bandweite von 0,5 K bis 2 K aufweist.

12. Verfahren nach einem der Ansprüche 1 bis 11, **dadurch gekennzeichnet, dass** die Zustandsgröße die Raumtemperatur und die gebäudetechnische Installation eine Heizung (3) oder eine Klimaanlage ist.

## Claims

1. Process for controlling a state variable controllable by a technical building installation, by which process the state variable is detected continuously or at least during a given period of time and the detected state variable as ACTUAL state variable is compared with a SET state variable and on detection of a deviation from the norm this deviation is evaluated with regard to whether the actuator (6) provided to control the technical building installation is to be or not to be overridden to compensate the deviation, wherein a first controller is used to detect and compensate detected deviations of the ACTUAL state variable from the SET state variable, and in case of a compensation to be effected, the actuator (6) is overridden accordingly and in the following the modification of the state variable with regard to the overriding of the actuator (6) is monitored, whether the effected modification of the state variable was sufficient to compensate the deviation, **characterized by the fact** that the modification of the state variable with regard to the overriding of the actuator (6) is also monitored with regard to whether the modification pattern of the state variable as ACTUAL modification pattern sufficiently corresponds to a SET modification pattern, wherein on detection of a deviation regarding the modification pattern of the state variable, with the next overriding of the actuator (6) this overriding for converging the deviation of the detected ACTUAL modification pattern to the SET modification pattern is effected by means of at least one changed control parameter, wherein the adaptation of an ACTUAL modification pattern of the changing state variable to a SET modification pattern is effected by means of a second controller, wherein the continuously detected state variable, with reference to the following criteria, after effected overriding of the variable (6) evaluates:
a) bounce and/or
b) persisting deviation and/or
c) vibration behaviour
and compares those with corresponding SET modification patterns.

2. Process in accordance with Claim 1, **characterized by the fact** that a deviation of the state variable is detected if the deviation is outside the permitted tolerance and has persisted for a certain time.

3. Process in accordance with Claim 2, **characterized by the fact** that a detected deviation of the modification pattern of the state variable of one of the named criteria from the relevant SET pattern is classified as sample deviation that needs to be changed if the deviation of the detected ACTUAL modification pattern from the SET modification pattern exceeds a permitted tolerance.

4. Process in accordance with any of Claims 1 to 3, **characterized by the fact** that each criterion for which a sample deviation requiring a modification in the overriding of the actuator (6) is detected, is evaluated with regard to the extent of the deviation and an overriding of the actuator (6) is effected if
- the evaluation parameter is larger than a preset threshold value or
- the evaluation parameters of the monitored criteria in a given link with each other are larger than a preset threshold value.

5. Process in accordance with any of Claims 1 to 4, **characterized by the fact** that an overriding of the actuator (6) as consequence of a detected deviation is effected only if a causal connection between the variable resulting from the control parameters and the ACTUAL state variable can be ascertained.

6. Process in accordance with Claim 5, **characterized by the fact** that in addition to the monitored state variable further data of the technical building installation, other technical building installations or additional data are evaluated to check the causal connection between the variable resulting from the control parameters and the ACTUAL state variable.

7. Process in accordance with any of Claims 1 to 6, **characterized by the fact** that the continuously detected state variable is stored in a ring memory (5).

8. Process in accordance with any of Claims 1 to 7, **characterized by the fact** that the evaluation of the persisting deviation, the bounce and/or the vibration behaviour are stored in a memory and remain stored until a subsequent evaluation of the modification behaviour after overriding the actuator (6) has supplied another evaluation of an individual criterion and/or the linked criteria.

9. Process in accordance with any of Claims 1 to 8, **characterized by the fact** that during control of the variable to drive the actuator (6) the l-component is incremented resp. decremented only if the P-component has been decreased resp. increased to below 100% resp. -100%.

10. Process in accordance with Claim 9, **characterized by the fact** that for driving the actuator (6) the l-component is incremented resp. decremented if the P-component runs into a proportional band surrounding the working point (*w*).

11. Process in accordance with Claim 10, **characterized by the fact** that the proportional band has a band width of 0.5 K to 2 K.

12. Process in accordance with any of Claims 1 to 11, **characterized by the fact** that the state variable is the room temperature and the technical building installation is a heating (3) or an air conditioning system.

## Revendications

1. Procédé pour le réglage d'un paramètre d'état pouvant être réglé par une installation domotique, par lequel le paramètre d'état est mesuré dans le temps au moins pendant une durée donnée et le paramètre d'état ainsi saisi reproduisant l'état réel est comparé à un paramètre d'état de consigne, et par lequel, en cas de constat d'un écart de réglage, celui-ci est évalué afin de déterminer si l'acteur de réglage (6) prévu pour le pilotage de l'installation domotique doit être influencé pour compenser l'écart de réglage ou non, un premier régleur étant utilisé, à l'aide duquel les divergences constatées entre le paramètre d'état réel et le paramètre d'état de consigne sont saisies et compensées, et, en cas de compensation à engager, l'acteur de réglage (6) est influencé en conséquence et la modification du paramètre d'état est ensuite surveillée en ce qui concerne l'influence de l'acteur de réglage (6) afin de contrôler si la modification du paramètre d'état obtenue a été suffisante pour compenser l'écart de réglage, **caractérisé en ce que** la modification du paramètre d'état en ce qui concerne l'influence de l'acteur de réglage (6) est de plus surveillée afin de déterminer si le schéma de comportement de modification du paramètre d'état en tant que schéma de comportement de modification réel correspond suffisamment à un schéma de comportement de modification de consigne, l'influence de l'acteur de réglage (6) destinée à rapprocher du schéma de comportement de modification de consigne la divergence du schéma de comportement de modification réel saisi ayant lieu lors de la prochaine influence, en cas de constat d'un écart de réglage en ce qui concerne le schéma de comportement de modification du paramètre d'état, avec au moins un paramètre de réglage modifié, l'adaptation à un schéma de comportement de modification de consigne d'un schéma de comportement de modification réel du paramètre de réglage se modifiant ayant lieu à l'aide d'un second régleur, le paramètre d'état mesuré dans le temps étant analysé en fonction des critères suivants après influence de la donnée de réglage (6) :
a) sautes et/ou
b) persistance de l'écart de réglage et/ou
c) oscillations
et celui-ci étant comparé aux schéma de comportements de consigne correspondants.

2. Procédé selon la revendication 1, **caractérisé en ce que** un écart de réglage du paramètre d'état est constaté si celui-ci est en dehors d'une tolérance admise et a persisté pendant une durée déterminée.

3. Procédé selon la revendication 2, **caractérisé en ce que** une divergence saisie du schéma de comportement de modification du paramètre d'état de l'un des critères mentionnés par rapport au schéma de consigne correspondant est considérée comme écart de réglage du schéma rendant nécessaire une modification si la divergence entre le schéma de comportement de modification réel saisi et le schéma de comportement de modification de consigne dépasse une tolérance admise.

4. Procédé selon l'une des revendications 1 à 3, **caractérisé en ce que** chaque critère pour lequel est constaté un écart de réglage du schéma rendant nécessaire une modification de l'influence de l'acteur de réglage (6) est évalué en ce qui concerne l'importance de l'écart et **en ce que** une influence de l'acteur de réglage (6) est effectuée si
- la valeur évaluée est plus grande qu'une valeur seuil donnée ou
- les valeurs évaluées des critères surveillés, associées dans une configuration donnée, sont plus grandes qu'une valeur seuil donnée.

5. Procédé selon l'une des revendications 1 à 4, **caractérisé en ce que** une influence de l'acteur de réglage (6) à la suite d'un écart de réglage constaté n'a lieu que si une relation de cause à effet entre la valeur de réglage résultant des paramètres de réglage et le paramètre d'état réel peut être constatée.

6. Procédé selon la revendication 5, **caractérisé en ce que,** outre le paramètre d'état surveillé, d'autres données de l'installation domotique, d'autres installations domotiques ou des données supplémentaires sont prises en compte dans l'évaluation afin d'examiner le rapport de cause à effet entre la valeur de réglage résultant des paramètres de réglage et le paramètre d'état réel.

7. Procédé selon l'une des revendications 1 à 6, **caractérisé en ce que** le paramètre d'état mesuré dans le temps est déposé dans une mémoire tampon circulaire (5).

8. Procédé selon l'une des revendications 1 à 7, **caractérisé en ce que** l'évaluation de l'écart de réglage persistant, des sautes et/ou des oscillations est déposée dans une mémoire et reste stockée jusqu'à ce qu'une évaluation ultérieure du comportement de modification après une influence de l'acteur de réglage (6) ait fourni une autre évaluation d'un critère isolé et/ou des critères associés.

9. Procédé selon l'une des revendications 1 à 8, **caractérisé en ce que,** lors du réglage de la valeur de réglage pour le pilotage de l'acteur de réglage (6), la part I n'est incrémentée ou décrémentée que si la part P est abaissée ou relevée à moins de 100% ou de -100%.

10. Procédé selon la revendication 9, **caractérisé en ce que,** pour le pilotage de l'acteur de réglage (6), la part I est incrémentée ou décrémentée si la part P arrive dans une bande proportionnelle incluant le point de travail (w).

11. Procédé selon la revendication 10, **caractérisé en ce que** la bande proportionnelle présente une bande passante de 0,5 K à 2 K.

12. Procédé selon l'une des revendications 1 à 11, **caractérisé en ce que** le paramètre d'état est la température ambiante et l'installation domotique un chauffage (3) ou une climatisation.
